# EUROPEAN PATENT SPECIFICATION

(11) **EP 1 428 440 B1**
(45) Date of publication and mention of the grant of the patent: **23.08.2006**
(21) Application number: 03027726.3
(22) Date of filing: 02.12.2003
(51) Int. Cl.: A23L 1/23, A23L 1/238, A23J 3/34, A23L 1/227

(54) **Seasoning and the process of producing it**
Gewürzmittel und Verfahren zu seiner Herstellung
Assaisonnement et son procédé de production

(30) Priority: 10.12.2002 JP 2002358575
(43) Date of publication of application: 16.06.2004
(73) Proprietor: Ajinomoto Co., Inc., Tokyo 104 (JP)
(72) Inventor: Ninomiya, Daiki, Kawasaki-shi Kanagawa (JP); Koibuchi, Kyoko, Kawasaki-shi Kanagawa (JP); Hirai, Sachi, Kawasaki-shi Kanagawa (JP); Okamura, Hideki, Kawasaki-shi Kanagawa (JP); Tanaka, Naoko, Kawasaki-shi Kanagawa (JP)
(74) Representative: Strehl Schübel-Hopf & Partner

(56) References cited:
- EP-A- 1 104 654
- US-A- 3 932 671
- US-A- 4 587 127
- US-A1- 2002 012 659
- DATABASE WPI Section Ch, Week 199324 Derwent Publications Ltd., London, GB; Class D13, AN 1993-190680 XP002274098 & JP 05 115261 A (KIKKOMAN CORP), 14 May 1993 (1993-05-14)
- PATENT ABSTRACTS OF JAPAN vol. 1998, no. 02 30 January 1998 & JP 09 271 351 A (KIKKOMAN CORP) 21 October 1997

## Description

### [Technical Field]

The present invention relates to an amino acid composition, more specifically to an amino acid composition obtainable by hydrolyzing proteinaceous koji containing soybean protein as the main raw material to release 65% or more of amino acids contained in the protein, as well as a process of producing the composition.

### [Background Art]

Seasoning materials containing amino acids such as glutamic acid and peptides have been used so far to give umami and body to processed food products and various seasonings such as noodle soups, dips and seasoning liquids for pickles. Among these materials, proteins of vegetables such as soybean and proteins of animals such as cow, pork and chicken have been used commonly after they pass through acidic or enzymatic hydrolysis. Particularly, hydrolyzed vegetable proteins (HVP) obtainable by acid hydrolysis of vegetable proteins as well as soy sauce as one of traditional Japanese fermentation seasonings are representative.

Because HVP are currently produced by hydrolysis of protein-abundant cereals and beans for example soybean with hydrochloric acid at high temperature, almost 100% of the proteins therein are hydrolyzed to amino acids. Therefore, the resulting hydrolyzed product contains a vast amount of amino acids giving umami such as glutamic acid. Due to the hydrolysis at the conditions of high temperature and acidity, substances giving HVP-specific flavors and taste are generated via chemical reactions from sugars, amino acids, organic acids and lipids. It has been known that sotolone as a flavor component and formic acid and levulinic acid as tasteful components are generated.

Meanwhile, soy sauce is produced by the following traditional process. First, the raw material defatted soybean is steamed, with which an almost equal volume of frizzled and split wheat is then mixed. Spores of kojimoldare then inoculated in the resulting mixture for koji production. The resulting koji is mixed with an aqueous salt solution to prepare unrefined soy, which is then fermented and aged for a long period of time to prepare soy sauce. The taste is ascribed to the amino acids and peptides therein. Because only about 50% of the proteins is hydrolyzed, the resulting soy sauce is at lower contents of amino acids, particularly glutamic acid, compared with HVP. Thus, the resulting soy sauce has a poor taste titer. Further, the resulting soy sauce has unique soy sauce flavor because soy sauce generates various alcohols, esters and organic acids such as acetic acid, due to the actions of yeast and lactic acid during the aging for a half year or more.

As described above, HVP and soy sauce have been used domestically and overseas as fundamental seasoning materials with a function giving taste such as umami and body as well as unique flavor to various processed food products and seasonings. Because HVP and soy sauce are in liquid forms at a salt content at 10 to 20%, however, salty taste is too strong when a large volume of HVP or soy sauce is used. Consequently, a problem occurs such as no emergence of umami and body at desirable intensities. Because salt contained in some processed foods affects the physico-chemical properties of the processed food products and the taste thereof, the amount of HVP or soy sauce for use therein is limited. Consequently, disadvantageously, the umami or body at a desirable intensity cannot be given. For example, the formation of set gel of fish cakes such as boiled fish paste in roll-cake shape (i.e., "kamaboko" in Japanese) is suppressed when a large amount of salt is added thereto. Therefore, a large amount of HVP or soy sauce cannot be added. Accordingly, preferably, a fundamental seasoning material at a low content of salt is preferable as such fundamental seasoning material for giving umami and body.

If HVP or soy sauce not containing a large amount of salt but still having umami and body can be produced, the concentration of salt can be adjusted, appropriately, so that not only the frequency of the use of such HVP or soy sauce by food manufacturers can be raised more than ever but also umami and body can be given to a wide variety of processed food products and seasonings. Because unnecessary salt is consequently not added to food products, advantageously, the consumer intake of salt can be reduced. Soy sauce at a low salt content (salt-reduced soy sauce) is available, which is produced by desalting the soy sauce produced by authentic brewery. However, the umami and body of soy sauce as well as salt contained in soy sauce is reduced in the salt-reduced soy sauce, disadvantageously. Thus, even such soy sauce cannot meet the object described above.

Because both HVP and soy sauce have strong unique flavor in addition to the problem of HVP and soy sauce due to the salt therein as described above, HVP and soy sauce when used at a large amount in foods and seasonings disadvantageously damage the flavor balance in the resulting processed food products and seasonings. Because HVP and soy sauce mask the flavor of other food materials and seasoning materials, in particular, complex food flavor desired by consumers is lost, so that the resulting processed food products and seasonings disadvantageously have monotonous flavor, for example only the flavor of soy sauce being enhanced. Noodle soup is one of such examples. Noodle soup is prepared by mixing together the broth prepared mainly from dried bonito and soy sauce. But aroma components of soy sauce, for example isobutyl alcohol (iba), n-butyl alcohol (nba) and isoamyl alcohol (iaa) mask the flavor of the soup from dried bonito, so that the overall flavor is deteriorated, disadvantageously (Japanese patent No. 2862719).

Thus, a fundamental seasoning material with flavor not too strong is desirable as the fundamental seasoning material giving taste comprising umami and body. If such seasoning with less flavor is obtained, HVP and soy sauce can be partially mixed and used, when HVP flavor and soy sauce flavor are needed. Additionally, an appropriate amount of flavor not masking the flavor of other food materials and seasoning materials can be given, appropriately.

As soy sauce with less flavor, so far, deodorized soy sauce with less aroma components of soy sauce such as iba, nba and iaa has been developed, which is prepared by purging nitrogen gas into soy sauce (Japanese patent No. 2862719)or a type of soy sauce has also been developed, which is prepared by hydrolyzing solid koji in the absence of salt at high temperature for a short period of time (Japanese patent application No. 2002-103013 ).

Japanese patent No. 9271351 discloses a soy sauce treated with a reverse osmosis membrane to remove iba, nba and iaa.

As described above, the fundamental seasoning material giving taste such as umami and body is desirably a fundamental seasoning material with no content of salt and with no strong flavor component. From the standpoint of taste titer, desirably, amino acids in a raw protein material are in the free forms at a ratio larger than that in soy sauce, and if possible, at almost 100% as in HVP. The high HVP hydrolysis ratio to amino acids is owing to the production process, namely acid hydrolysis. However, 3-MCPD (3-monochloropropane-1,2-diol) generated in the course of the acid hydrolysis has increasingly been regulated. In Europe, for example, there is a provision of the upper limit in the statute. Regulations over 3-MCPD are increasingly stricter. Desirably, not the acid hydrolysis process but the same traditional solid koji process as for soy sauce should be selected for a process of producing fundamental seasoning materials, which may be developed in future.

What has been described above can be summarized as follows. As the fundamental seasoning material giving umami and body, a fundamental seasoning material giving umami and body as produced by the traditional solid koj i process is desired, which does not contain salt but is at a content of amino acids per nitrogen as high as that of HVP and does not contain strong flavor components.

As the method for raising the content of amino acids in the production of soy sauce by the solid koji process, a process of koji hydrolysis with no use of salt at 2 to 25°C was developed (US patent 5,523,100). By the process, the content of amino acids is surely raised. But the process comprises a step of adding salt to fermented koji after the hydrolysis to ferment the resulting unrefined soy. Therefore, the resulting soy sauce contains salt, disadvantageously. Additionally, a process comprising a step of hydrolyzing a mixture of koji and yeast in the absence of salt at 2 to 25°C is also disclosed (US patent 5, 888, 561) . Because yeast is used in the process, however, the resulting soy sauce essentially contains flavor components.

Further, technical information is disclosed for producing soy sauce and seasonings by using a koji species with endopeptidase and exonuclease activities 2-fold or more than that of the wild Aspergillus oryzae strain (US patent No. 6,090,607). However, disadvantageously, the resulting products contain salt.

Meanwhile, a process was disclosed for preparing fermented protein koji from protein-containing materials and carbohydrates and hydrolyzing the fermented protein koji at a temperature of 15°C to 60°C and pH 4.5 to 10 for 6 hours to 28 days, where a lactic acid bacterium of 10³ to 10⁷ cfu per gram of fermented protein koj i is inoculated at either the fermented protein koji stage or the hydrolysis stage (US patent 5,965,178). Because the hydrolysis in the absence of salt at low temperature involves a risk of the growth of undesirable microorganisms, the culture of a lactic acid bacterium is inoculated according to the process, to thereby protect koji from the growth of the undesirable microorganisms. At that amount of the inoculated microorganisms, however, the growth of lactic acid bacteria occurs during koji production and hydrolysis. Therefore, amino acids released during the hydrolysis are particularly assimilated, disadvantageously, so that the recovery of amino acids is reduced.

Further, a process of producing koj i by using raw materials after lactic acid fermentation is known for producing fermented seasoning (Japanese patent No. 3027352). According to the process, however, koji is mixed with aqueous salt solutions.

US patent 4,587,127 discloses a process for producing a liquid seasoning, which comprises according a hydrolyzate of soy sauce raw materials to contact with soy sauce lactic acid bacteria followed by a fermentation by a yeast.

### [Disclosure of the Invention]

It is an object of the invention to provide a seasoning obtainable by hydrolyzing vegetable protein by the same solid koji process as for soy sauce, which is at the zero content of salt or at a low content of salt and which is at a high hydrolysis ratio to amino acids and scarcely contains strong flavor components, as well as a process of producing the same.

So as to overcome the problems, the inventors have made investigations. Consequently, the inventors have found that acetic acid in addition to aroma components comprising isobutyl alcohol, n-butyl alcohol and isoamyl alcohol contained in soy sauce masks the taste and flavor of other seasonings and food materials and that an excellent seasoning can be obtainable by reducing the contents thereof. Then, the inventors have successfully obtained a seasoning with reduced amounts of the aroma components with no addition of salt, by allowing an appropriate amount of a lactic acid bacterium to exist at both the koji production step and the koji hydrolysis step (fermentation) in the production of soy sauce. The term "koji" as used herein means a solid culture of filamentous fungi such as Aspergillus oryzae, Aspergillus sojae using cooked cereals and/or beans as raw materials.

Specifically, the invention is as follows.
(1) A seasoning obtainable by allowing microorganisms with a protein hydrolysis potency to interact with raw materials containing vegetable protein, characterized in that the hydrolysis ratio to amino acids is 65% or more; the isobutyl alcohol concentration is 0.1 mg per gram of nitrogen or less; the n-butyl alcohol concentration is 0.25 mg per gram of nitrogen or less; the isoamyl alcohol concentration is 0.5 mg per gram of nitrogen or less; and the acetic acid concentration is 100 mg per gram of nitrogen or less.
(2) A seasoning described in (1), where the raw material containing vegetable protein is defatted soybean.
(3) A seasoning described in (1) or (2), where the microorganisms are filamentous fungi which belong to the genus Aspergillus.
(4) A seasoning described in (3), where the microorganisms are Aspergillus oryzae and/or Aspergillus sojae.
(5) A process of producing a seasoning comprising the following steps:
   (i) a step of preparing solid koji by inoculating microorganisms with protein hydrolysis potency in raw materials containing defatted soybean; and
   (ii) a step of hydrolyzing the protein by adding a solution to the resulting solid koj i at an amount approximating to a salt concentration of 5% by weight or less to form unrefined soy and fermenting the unrefined soy having a pH of 4 to 10 at 5 to 45°C for 40 to 144 hours,
   characterized in that lactic acid bacteria are added at 10⁸ to 10¹¹ cells per gram of raw material to the raw materials at the step (i) and at the step (ii), if necessary, lactic acid bacteria are added at 10⁸ to 10¹¹ cells per gram of unrefined soy to the unrefined soy and
   that the seasoning is at a hydrolysis ratio to amino acids at 65% or more; an isobutyl alcohol concentration at 0.1 mg per gram of nitrogen or less; an n-butyl alcohol concentration at 0.25 mg per gram of nitrogen or less; an isoamyl alcohol concentration at 0.5 mg per gram of nitrogen or less; and an acetic acid concentration at 100 mg per gram of nitrogen or less.
(6) A process described in (5), where the defatted soybean is modified and swelled in extruder to a nitrogen solution index (NSI) of 8 to 20.
(7) A process described in anyone of (5) or (6), characterized in that the nitrogen of a volume 2- to 10 fold the volume of the headspace of the fermentation tank is purged to the headspace above the unrefined soy and then the tank is sealed at the step (ii).
(8) A process described in (7), where the volume of nitrogen for substitution is 5- to 8 fold the volume of the headspace of the tank.
(9) A process described in any one of (5) to (8), where the microorganisms with protein hydrolysis potency are filamentous fungi which belong to the genus Aspergillus.
(10) A process described in (9), where the microorganisms with protein hydrolysis potency are Aspergillus oryzae and/or Aspergillus sojae.
(11) A process described in any one of (5) to (10), where the lactic acid bacterium is Lactococcus lactis.

In accordance with the invention, a seasoning can be produced, which is at the zero content of salt or at a low content of salt and which is at a high hydrolysis ratio to amino acids, and in which isobutyl alcohol, n-butyl alcohol, isoamyl alcohol and acetic acid are reduced.

The invention is now described in detail hereinbelow. The seasoning of the invention is a seasoning obtainable by allowing microorganisms with protein hydrolysis potency to interact with raw materials containing vegetable protein, characterized in that the hydrolysis ratio to amino acids is 65% or more; the isobutyl alcohol concentration is 0.1 mg per gram of nitrogen or less; the n-butyl alcohol concentration is 0.25 mg per gram of nitrogen or less; the isoamyl alcohol concentration is 0.5 mg per gram of nitrogen or less; and the acetic acid concentration is 100 mg per gram of nitrogen or less.

The hydrolysis ratio to amino acids is preferably 80% or more, more preferably 85% or more. The isobutyl alcohol concentration is preferably 0.08 mg per gram of nitrogen or less, more preferably 0.06 mg per gram of nitrogen or less. The n-butyl alcohol concentration is preferably 0.1 mg per gram of nitrogen or less, more preferably 0.05 mg per gram of nitrogen or less. The isoamyl alcohol concentration is preferably 0.4 mg per gram of nitrogen or less, more preferably 0. 3 mg per gram of nitrogen or less. The acetic acid concentration is preferably 60 mg per gram of nitrogen or less, more preferably 30 mg per gramof nitrogen or less.

The amount of nitrogen can be analyzed for example by the Kjeldahl method. Additionally, the amount of amino acid, the amount of acetic acid, and the amount of aroma components can be analyzed by amino acid analyzers, organic acid analyzers and gas chromatography, in this order.

In accordance with the invention, the term "hydrolysis ratio to amino acids" means the ratio of free amino acids to the total amount of amino acids contained in the hydrolyzed solution.

The raw materials containing vegetable protein comprise any raw material containing vegetable protein appropriate for foods, which can be hydrolyzed efficiently to amino acids with microorganisms with protein hydrolyzing potency. The raw materials comprise for example cereals and beans. Specifically, the raw materials comprise soybean, particularly defatted soybean. The term "defatted soybean" as used herein means a soybean meal after all extraction. The specification regarding the fat content of the defatted soybeans generally used in the present invention is 1,5 % or less. In accordance with the invention, the raw materials are composed of one kind or a mixture of two kinds or more. The raw material is particularly preferably defatted soybean. The defatted soybean may be mixed with an appropriate amount of wheat flour and the like.

The microorganisms with protein hydrolysis potency are preferably microorganisms, which can hydrolyze vegetable protein to a 65% or more hydrolysis ratio to amino acids and are appropriate for food production and which can additionally extracellularly secrete protein hydrolyzing enzymes such as protease and peptidase. Generally, the term "microorganisms with protein hydrolysis potency" in the present invention means that the hydrolysis ratio to amino acids is 65 % or more. Even microorganisms with low protein hydrolysis potency can be used if the fermentation (enzymatic reaction) period is longer. Such microorganisms comprise for example microorganisms of genera Aspergillus, Rhizopus, Mucor and Monascus. Among them, the genus Aspergillus is preferable. Specifically, forexample, A. oryzae, A. sojae, A. awamori, A. nidulans and A. niger are preferable. Among these microorganisms, A. oryzae and A. sojae are particularly preferable.

Because the seasoning of the invention as described above is at a 65% or more hydrolysis ratio to amino acids, the seasoning has a larger taste titer of amino acids than that of soy sauce. Additionally, the concentrations of isobutyl alcohol, n-butyl alcohol and isoamyl alcohol as the aroma components of soy sauce are lower than those in soy sauce of the related art. Due to the lower concentration of acetic acid therein, still additionally, the seasoning of the invention does not mask the taste and flavor of other seasonings and food materials but gives umami and body, compared with soy sauce of the related art and the deodorized soy sauce with aroma components reduced by nitrogen gas purging (Japanese Patent No. 2862719). Because the seasoning is at the zero content of salt or at a low content thereof, additionally, the seasoning is preferably used for foods in which the amount of salt used should be limited. If necessary, further, an appropriate amount of salt is added to the seasoning of the invention or a food using the same, to adjust the salt concentration to a desired concentration.

The process of producing the seasoning of the invention is now described below. The seasoning of the invention can be produced by the following steps.
(i) A step of preparing koji by inoculating microorganisms with protein hydrolysis potency in raw materials containing vegetable protein (Koji preparation step).
(ii) A step of hydrolyzing the protein, by adding a solution to the resulting koji at an amount approximating to a salt concentration not inhibiting the hydrolysis of the protein, to form unrefined soy and then fermenting the unrefined soy to hydrolyze the soybean protein (also referred to as fermentation step).

First, the koji preparation step is now described.
The raw materials containing vegetable protein comprise any raw material containing vegetable protein appropriate for foods, which can be hydrolyzed efficiently to amino acids with microorganisms with protein hydrolysis potency. The raw materials comprise for example cerealsand beans. Specifically, the raw material comprises soybean, particularly defatted soybean. In accordance with the invention, the raw materials are composed of one kind or a mixture of two kinds or more. The raw material is particularly preferably defatted soybean, but the defatted soybean may be mixed with an appropriate amount of wheat flour.

Further, the defatted soybean is preferably modified and swelled under heating and is subsequently dried to dry puffed bean. In such manner, the microorganisms with protein hydrolysis potency can more readily permeate into the inside of puffed soybean, while the water content of the raw materials can more readily be adjusted to 35 to 45%, which is suitable for the growth of koji mold. Further, a large amount of the lactic acid bacterium can be inoculated. The modification and swelling under heating is preferably carried out to a nitrogen solution index (NSC) of 8 to 20.

The microorganisms with protein hydrolysis potency are inoculated in such raw materials as described above, to prepare koji. In accordance with the invention, any of solid koj i and liquid koji may be applicable. Solid koji induces more kinds and larger amounts of protein hydrolyzing enzymes generated by the microorganisms such as protease and peptidase, which indicates that solid koji involves a higher hydrolysis ratio of amino acids. Thus, solid koji is preferable.

In accordance with the invention, the lactic acid bacterium is added at 10⁸ to 10¹¹ cells per gram of raw material to the raw material, at least at the koji preparation step of the koji preparation step and the fermentation step. As described below, in accordance with the invention, the hydrolysis of solid koji is done at a salt amount approximating to a salt concentration not inhibiting the hydrolysis with koji molds, for example at a salt concentration of 5% by weight or less. The term "at a salt amount approximating to a salt concentration not inhibiting the hydrolysis" means the amount corresponding to a salt concentration substantially not inhibiting the hydrolysis or a salt concentration low enough to cause the inhibition of the hydrolysis when it eventually happens to give no damage to the advantages of the invention. Specifically, the hydrolysis is not inhibited at a hydrolysis ratio to amino acids at 65% or more, preferably 80% or more, and more preferably 85% or more. In the koji for soy sauce in the related art, microorganisms of 10⁶ to 10¹⁰ cells per gram of koji are viable at the stage of dekoji (meaning one of koji preparation steps, where koji is finally prepared for completion). When such koji is mixed with a solution at a low salt concentration, the resulting mixture decays in several hours. Particularly when only defatted soybean is used as the raw material, the water content after steaming increases as high as 50 to 60%. In that case, therefore, contaminations with microorganisms such as Bacillus natto occur more readily than in soy sauce koj i prepared by mixing an equal amount of dry wheat flour. In accordance with the invention, thus, the lactic acid bacterium is inoculated in the raw material and koji, to suppress the growth of undesirable microorganisms and prevent koji from abnormal fermentation and decay due to the growth of undesirable microorganisms.

In accordance with the invention, the koji preparation can be done in the same manner as for koji preparation in the general production of soy sauce, except for the inoculation of the lactic acid bacterium. Specifically, a raw protein material is mixed with water, the lactic acid bacterium and seed koji. Water is preferably added to 35 to 45% by weight, preferably 37 to 42% by weight of the total weight of the mixture. The lactic acid bacterium is inoculated to 10⁸ to 10¹¹ cells/g per gram of raw materials, preferably 10⁹ to 10¹⁰ cells per gram of raw materials. By inoculating the lactic acid bacterium within the range at an early stage of the koji preparation, in particular, the colonies can be retained dominantly in the koji, to eliminate the possibility of the growth of other undesirable microorganisms.

Any lactic acid bacterium substantially not inhibiting the activity of a microorganisms with protein hydrolysis potency, to suppress the growth of undesirable contaminating microorganisms, is satisfactory with no specific limitation. Such lactic acid bacterium comprises for example bacteria of genera Lactobacillus and Lactococcus. Among the two, the genus Lactococcus is preferable. More specifically, L. lactis is listed.

Water and the lactic acid bacterium can be mixed with the raw material in the form of a liquid culture of the lactic acid bacterium. Specifically, a liquid culture of lactic acid bacterium is sprinkled for example on the modified and swelled raw material under heating. The liquid culture of the lactic acid bacterium preferably contains 10⁸ to 10¹¹ bacterial cells/mL or if possible, 10⁹ to 10¹⁰ bacterial cells/mL. The number of the bacterial cells of the lactic acid bacterium can be counted with a microscope. Otherwise, colony forming units on an agar culture medium suitable for the growth are counted, to assay the number.

Additionally, spores of koji mold are added to a spore number of 10⁶ to 10⁷ spores per gram of raw materials. The spore number of seed koji can be counted in the same manner as for the bacterial cell number of the lactic acid bacterium.
The koji preparation step is done by incubating the mixture of raw materials and koji mold, generally at 22 to 40°C, preferably 28 to 35°C for 24 to 72 hours, preferably 38 to 60 hours. 18 to 28 hours after the start of the koji preparation, manual mixing ("te-ire" in Japanese) may satisfactorily be done.

The fermentation step is now described.
The resulting koji is added to the koji prepared as described above to form unrefined soy, which is then fermented to hydrolyze soybean protein. In accordance with the invention, generally, no salt is added to the solution or the unrefined soy. The salt concentration is preferably 5% by weight or less, more preferably 2% by weight or less of the total weight of the unrefined soy. Further, the unrefined soy may contain a small amount of salt derived from the liquid culture of the lactic acid bacterium.

At the fermentation step, the addition of the lactic acid bacterium to the unrefined soy is not essential, but is preferable. When the lactic acid bacterium is added to the unrefined soy, the lactic acid bacterium is inoculated to 10⁸ to 10¹¹ cells per gram of unrefined soy or, preferably 10⁹ to 10¹⁰ cells per gram of unrefined soy. The increase of the number of the lactic acid bacterium further grows the lactic acid bacterium from an early stage of the fermentation step, to thereby suppress the assimilation of the amino acids generated by the hydrolysis.

The solution is preferably added, generally at a 1.5- to 5-fold, preferably 2- to 4-fold the weight of koji. The solution and the lactic acid bacterium can be mixed in the form of a liquid culture of the lactic acid bacterium with the raw material. In such case, the liquid culture of the lactic acid bacterium preferably contains the bacterial cells of 10⁹ to 10¹⁰ cells/mL.

The fermentation step is carried out at a temperature where the lactic acid bacterium can grow, specifically 5 to 45°C in general, preferably 30 to 37°C for 40 to 144 hours, preferably for 48 to 96 hours. Additionally, the pH of the unrefined soy is adjusted to preferably 4 to 10, more preferably 5 to 7.

At the fermentation step, additionally, nitrogen is preferably purged to the headspace above the unrefined soy. Thereby, the proliferation of undesirable aerobic microorganisms can be suppressed. As to the degree of nitrogen substitution, for example, nitrogen gas of a volume 2- to 10 fold, preferably 5- to 8 fold the headspace volume of a tank with the unrefined soy is used. Then, the tank is sealed.

The fermentation step is carried out as described above, to thereby prevent the growth or proliferation of undesirable microorganisms. Because yeast involved in the general soy sauce production hardly grows, additionally, the soy sauce flavor is possibly reduced.

After the completion of the fermentation step, the same general procedures as for soy sauce can be done. For example, the unrefined soy is filtered to discard solids therein, and then sterilized at 60 to 120°C. Otherwise, the unrefined soy may be sterilized and then filtered, satisfactorily. The resulting unrefined soy is used as a raw material for other fermentation seasonings or fermentation food products.

### [Examples]

The invention is now described more specifically in the following examples. However, the examples do not limit the invention.
In the following examples, herein, "TN" means nitrogen and "gTN" means gram of nitrogen.

### <Example 1>

A liquid culture of a lactic acid bacterium (L. lactis NBRC 12007) contained the bacterial cells at 10⁹ to 10¹⁰ cells/mL and was preliminarily adjusted to pH 6.3. Then, 180 mL of the resulting liquid culture was mixed with 360 g of the swelled defatted soybean (manufactured by Ajinomoto Corporation; Protein TY, NSI 15), followed by further mixing the spores of koji molds (A. oryzae JCM 2231) with the raw material to 2 × 10⁶ cells per gram of raw material. Then, the resulting mixture was prepared as koji at 30 to 32°C for 48 hours according to the general method. 18 and 25 hours later just when the temperature of koji exceeded 32°C, the koji was mixed together. The water content in the mixture was 37%.
Herein, the strain NBRC 12007 was deposited as IFO 12007 at IFO (the Institute for Fermentation, Osaka, Japan). The IFO's duty to store microorganisms has been handed over the National Institute of Technology and Evaluation, Biological Resource Center (NBRC) (2-5-8, Kazusa-Kamatari, Kisarazu-shi, Chiba-ken, 292-0818 (zip code)), where the strain is now stored as strain NBRC 12007. In other words, the strain NBRC 12007 is the same strain as the strain IFO 12007. Additionally, the strain JCM 2231 is stored at Riken, Japan Collection of Microorganisms (JCM) (2-1, Hirosawa, Wako-shi, Saitama-ken, 351-0198 (zip code)). Any of the strains can be supplied by NBRC or JCM.

500 g of the resulting koji was added to 2 L of a liquid culture of a lactic acid bacterium (L. lactis NBRC-12007 (IFO 12007 under old name)), which contained the bacterial cells at 10⁹ to 10¹⁰ cells/mL and was preliminarily adjusted to pH 6.3. The resulting mixture was then put in a pressure-resistant bottle, of which the inside could be sealed through a pinch cock from atmosphere. After nitrogen gas of a volume 5-fold the volume of the headspace in the container was purged into the headspace under atmospheric pressure, the pinch cock was closed to seal the container. The container was left to stand in an incubator at 35°C for 24 hours, 48 hours, 96 hours, 144 hours and 240 hours, for hydrolyzing the defatted soybean protein with koji.

By discarding solids of unrefined soy, a hydrolyzed solution was prepared and treated at 80°C for 30 minutes, for sterilization. The sterilized solution was incubated overnight at 4°C, from which solids were filtered off and discarded. To the resulting clear liquid of 2 L was added 20 g of active charcoal (Active Charcoal BA: manufactured by Ajinomoto-Fine-Techno, Co., Inc.) for incubation at 50°C for 30 minutes under constant agitation, so that the resulting mixture was deodorized and decolored. Finally, the resulting solution was filtered to remove the active charcoal, to recover a liquid seasoning as the final product.

For the liquid seasoning obtainable by such procedures, the following tests were done: nitrogen (TN) analysis by the Kjeldahl method, the analysis of amino acids (total amino acids) by an amino acid analyzer (Hitachi L-8000), the analysis of various organic acid concentrations by an organic acid analyzer (Hitachi L-7000), the analysis of various sugar concentrations by a sugar analyzer (Hitachi L-6000), the analysis of the aroma components by gas chromatography, pH measurement and an organoleptic test in a homogeneous system by ten sensory evaluation panelists.

A sensory evaluation in a homogeneous system was conducted by a method comprising diluting each sample to a nitrogen concentration (T-N) of 0.1% and a salt concentration of 1.0% and supplementing the resulting diluted samples with salts, for sensory evaluation at a state of ambient temperature.

The results of the component analysis of sample products in the individual hydrolysis periods and the sensory evaluation results in a homogeneous system are compared with the results of a commercially available general soy sauce (koikuchi soy sauce). The results are shown in Table 1.

**Table 1**

| Hydrolysis time | 24 hours | 48 hours | 96 hours | 144 hours | 240 hours | General soy sauce |
|---|---|---|---|---|---|---|
| Hydrolysis ratio to amino acids (%) | 61 | 81 | 83 | 84 | 84 | 52 |
| iba (mg/gTN) | | 0.05 | 0.06 | 0.04 | | 0.33 |
| nba (mg/gTN) | | 0.02 | 0.01 | 0.01 | | 0.66 |
| iaa (mg/gTN) | | 0.28 | 0.32 | 0.45 | | 1.28 |
| Acetic acid (mg/gTN) | 20 | 20 | 70 | 80 | 73 | 143 |
| Sensory evaluation | weak umami, small taste titer | umami, strong first taste, thicknes s, final taste sustaina ble | umami, strong first taste, thickness | taste with good umami, strong first taste and great thickness, but more or less poorer taste compared with the taste in case of 96-hour hydrolysis | refreshing taste with less thickness, weak umami | umami and unique soy sauce flavor |

Consequently, the hydrolysis ratio of amino acids reached 80% or more, through the hydrolysis for 48 hours or more. It was found that the resulting soy sauce almost scarcely contained aroma components unique to soy sauce, such as isobutyl alcohol (iba), n-butyl alcohol (nba), isoamyl alcohol (iaa) and acetic acid. The taste of the seasoning obtainable in accordance with the invention characteristically comprises strong umami and strong initial taste, as well as thickness. Thus, the taste thereof was far closer to the characteristics of acid-hydrolyzed amino acid solution, rather than those of the taste of soy sauce. Among them, in particular, it was felt that the seasonings of a hydrolysis time of 48 hours to 144 hours had strong umami, initial taste and thickness. Because a small amount of peptides remains in the seasoning in case of the 48-hour hydrolysis, the seasoning had "after taste sustainable".

As to the odor, further, strong flavor unique to acid-hydrolyzed amino acids or soy sauce was not felt. Slight cereal or bean odor was felt. Almost no difference due to these hydrolysis times was observed. In the following Examples, therefore, the hydrolysis time was set at 48 hours to 144 hours.

### <Example 2>

In the hydrolysis of solid koji, the relation between the hydrolysis temperature and the production stability or the taste of the resulting liquid seasoning or the like was examined. The hydrolysis was done at temperatures of 30, 35 and 37°C. The hydrolysis time was 96 hours.

500 g of the solid koj i obtainable by the process described in Example 1 was added to 2 L of a liquid culture of a lactic acid bacterium (L. lactis NBRC-12007 (IFO 12007 under old name)),which contained the bacterial cells at 10⁹ to 10¹⁰ cells/mL and was preliminarily adjusted to pH 6.3. The resulting mixture was put in a pressure-resistant bottle, of which the inside could be sealed through a pinch cock from atmosphere. After nitrogen gas of a volume 5-fold the volume of the headspace in the container was purged into the headspace, the pinch cock was closed to seal the container. The container was left to stand in an incubator for the hydrolysis at the above temperatures for 96 hours. Subsequently, the hydrolyzed products were treated by the process described in Example 1, to obtain liquid seasonings.

The results of the component analysis of the sample products with assigned hydrolysis temperatures, the sensory evaluation results in a homogeneous system and the microbial analysis after completion of the hydrolysis are compared with each other and are shown in Table 2.

**Table 2**

| | 30°C | 35°C | 37°C |
|---|---|---|---|
| Hydrolysis ratio to amino acids (%) | 81 | 83 | 84 |
| iba (mg/gTN) | | 0.06 | |
| nba (mg/gTN) | - | 0.02 | - |
| iaa (mg/gTN) | - | 0.39 | - |
| Acetic acid (mg/gTN) | - | 74 | - |
| Bacteria *) (cells/g • unrefined soy) | < 20 | < 20 | < 20 |
| Yeast (cells/g • unrefined soy) | < 20 | < 20 | < 20 |

| | | | |
|---|---|---|---|
| *) Bacteria except for the inoculated lactic acid bacterium. The symbol "-" expresses no assay done. | | | |

Consequently, the hydrolysis ratio to amino acids did not so much differ between the hydrolysis temperatures of 30 to 37°C.

Thus, the hydrolysis temperature was set at 30 to 37°C in the following Examples, in view of both the hydrolysis ratio to amino acids and bacteriostasis.

### <Example 3>

In the present Example, the need of bacteriostasis during the hydrolysis was examined, while in the Examples 1 and 2, the growth of obligate aerobes comprising Bacillus subtilis was suppressed by substituting the headspace air in the upper top of the tank with nitrogen gas during the hydrolysis, to put the whole hydrolysis system at an anaerobic state.

A liquid culture of a lactic acid bacterium (L. lactis NBRC-12007 (IFO 12007 under old name)) contained the bacterial cells at 10⁹ to 10¹⁰ cells/mL and was preliminarily adjusted to pH 6.3. Then, 180 ml of the resulting liquid culture was mixed with 360 g of the swelled defatted soybean (manufactured by Aj inomoto Corporation; Protein TY, NSI 15), followed by further mixing the spores of koji molds (A. oryzae JCM 2231) to 2 × 10⁶ cells per gram of raw material. Then, the resulting mixture was used for koji preparation, at 30 to 32°C for 48 hours according to the general method. The water content in the mixture was 37%. Then, the koji was mixed 18 and 25 hours later in the same manner as in the production method of soy sauce koj i in the related art.

500 g of the resulting koj i was added to 2 L of a liquid culture of a lactic acid bacterium (L. lactis NBRC-12007 (IFO 12007 under old name)), which contained the bacterial cells at 10⁹ cells/mL and was preliminarily adjusted to pH 6.3. The resulting mixture was put in a pressure-resistant bottle, of which the inside could be sealed through a pinch cock from atmosphere. Herein, the number of the bacterial cells was adjusted by diluting the liquid culture of the lactic acid bacterium containing the cells of the lactic acid bacterium at 10¹⁰ cells/mL with sterile water. Nitrogen gas was purged in the headspace in the container, to substitute the headspace air with nitrogen gas of a volume 5-fold the volume of the headspace in the container. Then, the pinch cock was closed to seal the container. The hydrolysis was done in an incubator at 35°C for 48 hours. As a control lot, the hydrolysis was done in an incubator at 35°C for 96 hours, without the nitrogen gas substitution. Subsequently, the hydrolyzed products were treated by the process described in Example 1, to obtain liquid seasonings.

Under the above conditions, it was found that koji covered the surface of unrefined soy unless the headspace air was substituted with nitrogen, so that undesirable microorganisms for example cocci and bacteria of the genus Bacillus grew thereon. Thus, it was found that the headspace air in the tank was preferably substituted with nitrogen.

### <Example 4>

Then, a different lactic acid bacterial species was used, to prepare a seasoning.

L. lactis FERM BP-08552 was cultured in a culture medium of 0.54% of yeast extract, 3% of glucose and 0.5% of NaCl in a jar fermenter at conditions of no purging and an agitation number at 100 rpm for about 18 hours while retaining pH 5.5 with NaOH, to a bacterial cell concentration of 10⁹ to 10¹⁰ cells/mL. The strain was internationally deposited at the National Institute of Advanced Industrial Science and Technology, International Patent Organism Depositary, Central 6, 1-1-1, Higashi, Tsukuba, Ibaraki, Japan (zip code: 305-8566), under the Budapest Treaty. The strain was given Access No. FERM BP-08552.

The liquid culture of the lactic acid bacterium (L. lactis FERM BP-08552) contained the bacterial cells at 10⁹ to 10¹⁰ cells/mL and was preliminarily adjusted to pH 6.3. Then, 180 ml of the liquid culture was mixed with 360 g of the swelled defatted soybean (manufactured by Ajinomoto Corporation; Protein TY, NSI 15), followed by further mixing the spores of koji molds (A. oryzae JCM 2231) to 2 × 10⁶ cells per gram of raw material. Then, the resulting mixture was prepared as koji at 30 to 32°C for 48 hours according to the general method. The water content in the mixture was 37%. Then, the koji was mixed together 18 and 25 hours later, in the same manner as for the production process of soy sauce koji in the related art.

500 g of the resulting koji was added to 2 L of a liquid culture of a lactic acid bacterium (the liquid culture of L. lactis FERM BP-08552), which contained the bacterial cells at 10⁹ cells/mL and was preliminarily adjusted to pH 6.3. The resulting mixture was then put in a pressure-resistant bottle, of which the inside could be sealed through a pinch cock from atmosphere. Herein, the number of the bacterial cells was adjusted by diluting the liquid culture of the lactic acid bacterium containing the cells of the lactic acid bacterium at 10¹⁰ cells/mL with sterile water. Nitrogen gas of a volume 5-fold the volume of the headspace in the container was purged in the headspace in the container, to substitute the headspace with nitrogen gas. Then, the pinch cock was closed to seal the container. The hydrolysis was done in an incubator at 35°C for 96 hours. Subsequently, the hydrolyzed products were treated by the process described in Example 1, to obtain a liquid seasoning.

The results of the component analysis of the liquid seasoning, the sensory evaluation results in a homogeneous system and the microbial analysis are shown in Table 3.

**Table 3**

| | |
|---|---|
| Hydrolysis ratio to amino acids (%) | 82 |
| iba (mg/gTN) | 0.04 |
| nba (mg/gTN) | 0.02 |
| iaa (mg/gTN) | 0.34 |
| Acetic acid (mg/gTN) | 45 |
| Bacteria *) (cells/g • unrefined soy) | < 20 |
| Yeast (cells/g • unrefined soy) | < 20 |
| Sensory evaluation | umami, strong first taste, thickness |

| | |
|---|---|
| *) Bacteria except for the inoculated lactic acid bacterium. | |

Consequently, the bacteriostasis of the hydrolyzed solution could be retained, even in the case that L. lactis FERM BP-08552 was used as the lactic acid bacterium. Additionally, the results of the sensory evaluation and the analytical values were almost the same as in the results in Example 1. As described above, the seasoning obtainable in accordance with the invention could be produced, even when the different lactic acid bacterium was used.

### <Example 5>

It was considered that because the liquid seasoning of the invention contained only smaller amounts of isobutyl alcohol (iba), n-butyl alcohol (nba) and isoamyl alcohol (iaa), the liquid seasoning even when mixed with a broth from dried bonito would not mask the flavor of the broth but could produce a very tasteful noodle soup. In the resulting noodle soup, the liquid seasoning of the invention had been substituted for the soy sauce fraction. The sensory evaluation thereof was done.

In a composition mainly containing soy sauce, dried bonito (ara hon bushi, kare bushi), sugar, sweet sake (mirin), salt, Monosodium L-glutamate and lactic acid for noodle soup, the soy sauce fraction was substituted with the following seasonings.
1. The liquid seasoning obtainable in accordance with the invention (the liquid seasoning of Example 1 prepared at 35°C for 96 hours; the same is true hereinbelow.)
2. Commercially available general soy sauce (koikuchi soy sauce)
3. Deodorized soy sauce (the one prepared according to the method described in Japanese Patent No. 2872619.)
4. A liquid seasoning prepared by adding acetic acid at an amount equal to the amount contained in commercially available general soy sauce (koikuchi soy sauce) to the liquid seasoning of the invention.

Using the individual seasonings, noodle soups were prepared by mixing the individual seasonings at the following ratios. Their sensory evaluation was done.

The concentrations of iba, nba, iaa and acetic acid contained in the individual noodle soups are shown in Table 4. The four types of the noodle soups were evaluated by sensory panelists (n = 4). Then, the taste and flavor and smoke flavor of the noodle soups were ranked in the decreasing order. Then, the noodle soups were generally ranked by the rank method. In other words, the first grade was assigned 4 points; the second grade, 3 points; the third grade, 2 points; and the fourth grade, 1 point. The total of the points from the four panelists was defined as general score. The results are shown in Table 4.

**Table 4**

| | iba (ppm) | nba (ppm) | iaa (ppm) | Acetic acid (ppm) | General score |
|---|---|---|---|---|---|
| 1 | 1.0 | 2.0 | 4.0 | 480 | 16 points |
| 2 | 1.3 | 2.6 | 5.1 | 590 | 5 points |
| 3 | 1.1 | 2.2 | 4.3 | 560 | 11 points |
| 4 | 1.0 | 2.0 | 4.0 | 590 | 8 points |

Consequently, the taste and smoke flavor of the noodle soup using the liquid seasoning of the invention instead of soy sauce were most strongly felt. As the component masking the taste and smoke flavor of noodle soup, additionally, it was found that the influence of acetic acid was larger than those of the iaa, iba and nba disclosed in the Japanese Patent No. 2862719. Thus, it is possibly indicated that the liquid seasoning of the invention has an effect to permit the active utilization of the flavor of raw materials because the liquid seasoning does not contain acetic acid.

## Claims

1. A seasoning obtainable by allowing microorganisms with protein hydrolysis potency to interact with raw materials containing vegetable protein, **characterized in that** the hydrolysis ratio to amino acids is 65% or more; the isobutyl alcohol concentration is 0.1 mg per gram of nitrogen or less; the n-butyl alcohol concentration is 0.25 mg per gram of nitrogen or less; the isoamyl alcohol concentration is 0.5 mg per gram of nitrogen or less; and the acetic acid concentration is 100 mg per gram of nitrogen or less.

2. A seasoning according to claim 1, where the raw material containing vegetable protein is defatted soybean.

3. A seasoning according to claim 1 or 2, where the microorganisms are filamentous fungi which belong to the genus Aspergillus.

4. A seasoning according to claim 3, where the microorganisms are Aspergillus oryzae and/or Aspergillus soj ae.

5. A process of producing a seasoning comprising the following steps:
(i) a step of preparing solid koji by inoculating microorganisms with protein hydrolysis potency in raw materials containing defatted soybean; and
(ii) a step of hydrolyzing the protein by adding a solution to the resulting solid koji at an amount approximating to a salt concentration of 5% by weight or less to form unrefined soy and then fermenting the unrefined soy having a pH of 4 to 10 at 5 to 45°C for 40 to 144 hours, **characterized in that** a lactic acid bacterium is added at 10⁸ to 10¹¹ cells per gram of raw material to the raw materials at the step (i) and at the step (ii), if necessary, a lactic acid bacterium is added at 10⁸ to 10¹¹ cells per gram of unrefined soy to the unrefined soy and
that the seasoning is at a hydrolysis ratio to amino acids at 65% or more; an isobutyl alcohol concentration at 0.1 mg per gram of nitrogen or less; an n-butyl alcohol concentration at 0.25 mg per gram of nitrogen or less; an isoamyl alcohol concentration at 0.5 mg per gram of nitrogen or less; and an acetic acid concentration at 100 mg per gram of nitrogen or less.

6. A process according to claim 5, where the defatted soybean is modified and swelled in extruder to a nitrogen solution index (NSI) of 8 to 20.

7. A process according to any one of claims 5 or 6, **characterized in that** the nitrogen of a volume 2- to 10 fold the volume of the headspace of the fermentation tank is purged to the headspace above the unrefined soy and then the tank is sealed at the step (ii).

8. A process according to claim 7, where the volume of nitrogen is 5- to 8 fold the volume of the headspace of the tank.

9. A process according to any one of claims 5 to 8, where the microorganisms with protein hydrolysis potency are filamentous fungi which belong to the genus Aspergillus.

10. A process according to claim 9, where the microorganisms with protein hydrolysis potency are Aspergillus oryzae and/or Aspergillus sojae.

11. A process according to any one of claims 5 to 10, where the lactic acid bacterium is Lactococcus lactis.

## Patentansprüche

1. Würzstoff, erhältlich durch Zulassen einer Wechselwirkung von Mikroorganismen, die Proteine hydrolysieren können, mit Ausgangsmaterialien, die Pflanzenprotein enthalten, **dadurch gekennzeichnet, daß** der Grad der Hydrolyse zu Aminosäuren 65 % oder höher ist; die Isobutylalkoholkonzentration 0,1 mg pro Gramm Stickstoff oder weniger ist; die n-Butylalkoholkonzentration 0,25 mg pro Gramm Stickstoff oder weniger ist; die Isoamylalkoholkonzentration 0,5 mg pro Gramm Stickstoff oder weniger ist; und die Essigsäurekonzentration 100 mg pro Gramm Stickstoff oder weniger ist.

2. Würzstoff nach Anspruch 1, wobei das Ausgangsmaterial, das Pflanzenprotein enthält, entfettete Sojabohnen sind.

3. Würzstoff nach Anspruch 1 oder 2, worin die Mikroorganismen filamentöse Pilze sind, die zur Gattung Aspergillus gehören.

4. Würzstoff nach Anspruch 3, wobei die Mikroorganismen Aspergillus oryzae und/oder Aspergillus sojae sind.

5. Verfahren zur Herstellung eines Wirtsstoffes, welches die folgenden Stufen umfaßt:
(i) eine Stufe, in der fester Koji durch Einimpfen von Mikroorganismen, die Proteine hydrolysieren können, in Ausgangsmaterialien, die entfettete Sojabohnen enthalten, hergestellt wird; und
(ii) eine Stufe, in der das Protein durch Zugeben einer Lösung zu dem erhaltenen festen Koji in einer Menge, die etwa einer Salzkonzentration von 5 Gew.-% oder weniger entspricht, hydrolysiert wird, wobei unverarbeitete Sojabohnen gebildet werden, und dann die unverarbeiteten Sojabohnen bei einem pH-Wert von 4 bis 10 bei 5 bis 45°C während 40 bis 144 Stunden fermentiert werden, **dadurch gekennzeichnet, daß** ein Milchsäurebakterium in einer Menge von 10⁸ bis 10¹¹ Zellen pro Gramm des Ausgangsmaterials zu den Ausgangsmaterialien in Stufe (1) und in Stufe (2) bei Bedarf gegeben wird, ein Milchsäurebakterium in einer Menge von 10⁸ bis 10¹¹ Zellen pro Gramm der unverarbeiteten Sojabohnen zu den unverarbeiteten Sojabohnen gegeben wird und das Würzmittel einen Grad der Hydrolyse zu Aminosäuren von 65 % oder mehr aufweist; die Isobutylalkoholkonzentration 0,1 mg pro Gramm Stickstoff oder weniger ist, die n-Butylalkoholkonzentration 0,25 mg pro Gramm Stickstoff oder weniger ist; die Isoamylalkoholkonzentration 0,5 mg pro Gramm Stickstoff oder weniger ist; und die Essigsäurekonzentration 100 mg pro Gramm Stickstoff oder weniger ist.

6. Verfahren nach Anspruch 5, wobei die entfetteten Sojabohnen in einem Extruder modifiziert und gequollen werden, wobei sie einen Stickstofflösungsindex (NSI) von 8 bis 20 aufweisen.

7. Verfahren nach einem der Ansprüche 5 oder 6, **dadurch gekennzeichnet, daß** der Stickstoff in einem Volumen vom 2 bis 10-fachen des Volumens des Kopfraumes des Fermentationsbehälters in den Kopfraum über den unverarbeiteten Sojabohnen geleitet wird und der Behälter dann in Stufe (2) versiegelt wird.

8. Verfahren nach Anspruch 7, wobei das Stickstoffvolumen das 5- bis 8-fache des Volumens des Kopfraumes des Behälters ist.

9. Verfahren nach einem der Ansprüche 5 oder 8, wobei die Mikroorganismen, die Proteine hydrolysieren können, filamentöse Pilze der Gattung Aspergillus sind.

10. Verfahren nach Anspruch 9, wobei die Mikroorganismen, die Proteine hydrolysieren können, Aspergillus oryzae und/oder Aspergillus sojae sind.

11. Verfahren nach einem der Ansprüche 5 bis 10, wobei das Milchsäurebakterium Lactococcus lactis ist.

## Revendications

1. Assaisonnement pouvant être obtenu en laissant des micro-organismes ayant une capacité d'hydrolyse de protéine interagir avec des matières premières contenant une protéine végétale, **caractérisé en ce que** le rapport d'hydrolyse par rapport aux aminoacides est de 65 % ou supérieur ; la concentration en alcool isobutylique est de 0,1 mg/g d'azote ou inférieure ; la concentration en alcool n-butylique est de 0,25 mg/g d'azote ou inférieure ; la concentration en alcool isoamylique est de 0,5 mg/g d'azote ou inférieure ; et la concentration en acide acétique est de 100 mg/g d'azote ou inférieure.

2. Assaisonnement selon la revendication 1, dans lequel la matière première contenant une protéine végétale est du soja dégraissé.

3. Assaisonnement selon la revendication 1 ou 2, dans lequel les micro-organismes sont des fungi filamenteux qui appartiennent au genre Aspergillus.

4. Assaisonnement selon la revendication 3, dans lequel les micro-organismes sont Aspergillus oryzae et/ou Aspergillus sojae.

5. Procédé pour la production d'un assaisonnement comprenant les étapes suivantes :
(i) une étape de préparation de koji solide en inoculant des micro-organismes ayant une capacité d'hydrolyse de protéine dans des matières premières contenant du soja dégraissé ; et
(ii) une étape d'hydrolyse de la protéine par addition d'une solution au koji solide résultant avec une quantité approximant une concentration en sel de 5 % en poids ou inférieure pour former du soja non raffiné et de fermentation subséquente du soja non raffiné ayant un pH de 4 à 10 à de 5 à 45°C pendant de 40 à 144 h,
**caractérisé en ce que** l'on ajoute une bactérie d'acide lactique à de 10⁸ à 10¹¹ cellules par gramme de matière première aux matière première dans l'étape (i) et dans l'étape (ii), si nécessaire, on ajoute une bactérie d'acide lactique à de 10⁸ à 10¹¹ cellules par gramme de soja non raffiné au soja non raffiné et **en ce que** l'assaisonnement est à un rapport d'hydrolyse par rapport aux aminoacides de 65 % ou supérieur ; une concentration en alcool isobutylique est de 0,1 mg/g d'azote ou inférieure ; une concentration en alcool n-butylique est de 0,25 mg/g d'azote ou inférieure ; une concentration en alcool isoamylique est de 0,5 mg/g d'azote ou inférieure ; et une concentration en acide acétique est de 100 mg/g d'azote ou inférieure.

6. Procédé selon la revendication 5, dans lequel le soja dégraissé est modifié et gonflé dans une extrudeuse jusqu'à un indice de solution d'azote (NSI) de 8 à 20.

7. Procédé selon l'une quelconque des revendications 5 ou 6, **caractérisé en ce que** l'azote d'un volume de 2 à 10 fois le volume de l'espace de tête du récipient de fermentation est purgé dans l'espace de tête au-dessus du soja non raffiné et le récipient est ensuite scellé dans l'étape (ii).

8. Procédé selon la revendication 7, dans lequel le volume d'azote est de 5 à 8 fois le volume de l'espace de tête du récipient.

9. Procédé selon l'une quelconque des revendications 5 à 8, dans lequel les micro-organismes ayant une capacité d'hydrolyse de protéine sont des fungi filamenteux qui appartiennent au genre Aspergillus.

10. Procédé selon la revendication 9, dans lequel les micro-organismes ayant une capacité d'hydrolyse de protéine sont Aspergillus oryzae et/ou Aspergillus sojae.

11. Procédé selon l'une quelconque des revendications 5 à 10, dans lequel la bactérie d'acide lactique est Lactococcus lactis.
